**Europäisches Patentamt**

**European Patent Office**

**Office européen des brevets**

(19)

(11) Veröffentlichungsnummer: **0 328 909 B1**

# EUROPÄISCHE PATENTSCHRIFT

(12)

(45) Veröffentlichungstag der Patentschrift:
24.07.91 Patentblatt 91/30

(51) Int. Cl.⁵: **F16L 3/00, F16L 3/22**

(21) Anmeldenummer: 89101317.9

(22) Anmeldetag: 26.01.89

(54) **Haltevorrichtung für Rohrschellen oder andere Rohrlager.**

(30) Priorität: 17.02.88 DE 3804940

(43) Veröffentlichungstag der Anmeldung:
23.08.89 Patentblatt 89/34

(45) Bekanntmachung des Hinweises auf die
Patenterteilung:
24.07.91 Patentblatt 91/30

(84) Benannte Vertragsstaaten:
AT CH ES FR GB IT LI NL

(56) Entgegenhaltungen:
CH-A- 532 726
CH-A- 547 976
CH-A- 646 767
DE-A- 3 809 079

(73) Patentinhaber: Müller, Franz
Eichelhäherstrasse 1
W-6200 Wiesbaden (DE)

(72) Erfinder: Müller, Franz
Eichelhäherstrasse 1
W-6200 Wiesbaden (DE)

(74) Vertreter: Jochem, Bernd, Dipl.-Wirtsch.-Ing.
Patentanwälte Beyer & Jochem Postfach 17 01
45 Staufenstrasse 36
W-6000 Frankfurt/Main 1 (DE)

EP 0 328 909 B1

## Beschreibung

Die Erfindung betrifft eine Haltevorrichtung für eine oder mehrere Rohrschellen oder andere Rohrlager, die aus zwei mit Zwischenabstand auf einer Unterlage befestigbaren Paaren von durch Verbindungsschrauben verbundenen Winkelstücken besteht, gebildet jeweils von einem Unterteil mit Langlöchern in beiden Schenkeln und einem Oberteil mit in seinem einen Schenkel angeordneten, im montierten Zustand mit Langlöchern im Unterteil fluchtenden Langlöchern, durch welche sich die Verbindungsschrauben erstrecken, sowie mit Befestigungsmitteln zur direkten oder indirekten Anbringung der Rohrschellen oder Rohrlager am anderen Schenkel.

Rohrschellen werden bisher vielfach mit einem besonderen Befestigungsansatz, zum Beispiel in Form einer angeschweißten Mutter, versehen und auf einem Gewindebolzen befestigt. Rohrschellen ohne Befestigungsansatz können an einem Lochband angehängt werden. Außerdem besteht die Möglichkeit, die Rohrschellen mit ihren beiden Flanschen an zwei Gewindestäben oder Paaren von durch Verbindungsschrauben verbundenen Winkelstücken zu befestigen, die nur etwa so breit sind wie die Rohrschelle selbst und bis auf jeweils ein Langloch in dem von der Wand abstehenden Schenkel des unteren Winkelstücks runde Durchsteck- und Gewindelöcher für Verbindungs- und Befestigungsschrauben haben (Sanitär & Heizungs report 6/75, S. 64). In allen diesen Fällen handelt es sich um Haltevorrichtungen, die zwar in ihrer Längsrichtung ausreichend große Kräfte aufzunehmen vermögen, in Querrichtung aber verhältnismäßig leicht nachgeben. Dies macht sich vor allem dann bemerkbar, wenn in Längsrichtung eines Rohres große Kräfte auftreten, z.B. bei einem schweren Rohr in einem hohen Steigstrang am Festpunkt.

Aus der CH-A-532 726 ist weiterhin eine Haltevorrichtung zur Befestigung von Blechkanälen von Klima- und Lüftungsanlagen oder auch von Kabel- und Leitungskanälen bekannt, die ebenfalls aus zwei mit Zwischenabstand auf einer Unterlage befestigbaren Paaren von durch Verbindungsschrauben verbundenen Winkelstücken besteht. Diese Winkelstücke haben in allen Schenkeln jeweils ein sich parallel zu ihrer Scheitelkante erstreckendes Langloch und zusätzlich in den im montierten Zustand aneinander anliegenden Schenkeln ein sich quer zur Scheitelkante erstreckendes Langloch, welches jeweils das in demselben Schenkel vorhandene, parallel zur Scheitelkante liegende Langloch kreuzt. Würde man diese Haltevorrichtung zur Befestigung von Rohrschellen verwenden, ergäben sich ebenfalls die zuvor genannten Nachteile, da sich bei großen axialen Belastungen die Befestigungs- und Verbindungsschrauben in den sich parallel zu den Scheitelkanten erstreckenden Langlöchern relativ zu den Winkelstücken verschieben können. Außerdem gestattet diese Ausrichtung der Langlöcher keine Anpassung des Zwischenabstands der Winkelstückpaare einer Haltevorrichtung an unterschiedliche Rohrdurchmesser. Schließlich würde sich mit jeweils einer einzigen Befestigungs- oder Verbindungsschraube in jedem sich parallel zur Scheitelkante erstreckenden Langloch keine Halterung erzielen lassen, die geeignet wäre, hohe Kippmomente aufzunehmen.

Infolge der Nachgiebigkeit der bekannten Haltevorrichtungen für Rohrschellen in axialer Richtung können nicht nur an Festpunkten, sondern auch an einer sogenannten Schiebeschelle, in welcher ein Rohr in Längsrichtung verschieblich geführt ist, schwere Schäden auftreten, wenn eine Rohrschelle oder ein diese tragendes Schiebestück etwas stramm sitzt und eine sich zwischen der Rohrschelle und dem Rohr aufbauende, zunächst noch verhältnismäßig geringe Spannung nicht zum Durchrutschen z.B. des Rohrs in der Schelle, sondern zum Nachgeben bzw. Verbiegen der Haltevorrichtung führt. Dann verkantet die Rohrschelle, d.h. ihre Mittellängsachse stellt sich schräg zu der des Rohrs, und dadurch ergibt sich bei seiner weiteren Längendehnung ein zunehmend festerer Andruck gegen das Rohr bis entweder dieses oder seine Halterung zerstört wird, weil sich die verkantete Schiebeschelle wie ein weiterer Festpunkt verhält.

Der Erfindung liegt daher die Aufgabe zugrunde, eine Haltevorrichtung der eingangs genannten Art zu schaffen, welche unter Beibehaltung der vorteilhaften Eigenschaften der Einstellmöglichkeit und Verwendbarkeit bei unterschiedlich großen Rohrschellen in der Lage ist, wesentlich größere Querkräfte als bisher aufzunehmen, so daß z.B. ein Festpunkt geschaffen werden kann, an welchem ein Rohr örtlich festgelegt wird.

Vorstehende Aufgabe wird erfindungsgemäß dadurch gelöst, daß sich in beiden Schenkeln des Unterteils und in dem einen Schenkel des Oberteils jedes Winkelstückpaar der Haltevorrichtung jeweils mehrere Langlöcher quer zur Scheitelkante der Winkelstücke erstrecken.

Die neue Haltevorrichtung bietet nicht nur eine punktuelle, sondern verhältnismäßig breite, flächige Abstützung, die in axialer Richtung des Rohrs mehreren Befestigungs- und Verbindungsschrauben sowie mehreren Rohrschellen nebeneinander Platz bietet. Es können daher große Kippmomente bzw. Querkräfte aufgenommen werden, denn einerseits läßt sich z.B. mit mehreren Rohrschellen nebeneinander eine besonders große Haftreibung erzeugen, andererseits sorgt der axiale Zwischenabstand zwischen den Befestigungsschrauben am Fuß der Haltevorrichtung, wo das größte Biegemoment auftritt, für eine zuverlässig starre Befestigung, die höher belastbar ist als mehrere Haltevorrichtungen, die jeweils mit einer Befestigungsschraube festgelegt sind.

Für die Erfindung wirkt es sich als vorteilhaft aus, daß die sich quer zu den Scheitelkanten der Winkelstücke

EP 0 328 909 B1

erstreckenden Langlöchern in ihrer parallelen Anordnung nicht nur eine Anpassung an unterschiedliche Rohrdurchmesser gestatten, sondern gleichzeitig auch eine Verschiebung der Winkelstücke in axialer Richtung und darüberhinaus Kipp- und Drehbewegungen wirksam verhindern.

Zum besseren Verständnis der Erfindung werden nachstehend einige Ausführungsbeispiele anhand der Zeichnung näher erläutert.

Es zeigen :

Fig. 1    Eine Explosionsdarstellung einer aus zwei Paaren von Winkelstücken bestehenden Haltevorrichtung für Rohrschellen ;

Fig. 2    eine um 90° gedrehte Seitenansicht der Vorrichtung nach Fig. 1 im fertigmontierten Zustand ;

Fig. 3    eine perspektivische Darstellung einer Haltevorrichtung für drei Rohrschellen, wobei die Unterlage im Beispielsfall aus zwei parallelen Schienen besteht, die frei verschieblich auf einer Grundfläche, z.B. dem Fußboden, ruhen ;

Fig. 4    eine aus Winkelstücken bestehende Haltevorrichtung, die eine Gleitführung trägt, in welcher ein fest mit Rohrschellen verbundenes Schiebestück verschieblich geführt ist ;

Fig. 5    eine perspektivische Ansicht einer Ausführung, bei welcher Schienen, die ihrerseits nicht gezeigte Rohrschellen tragen, an den Winkelstücken befestigt sind ;

Fig. 6
und 7    verschiedene Seitenansichten eines abgewandelten Oberteils, welches statt Rohrschellen eine Rolle als Rohrlagerung trägt.

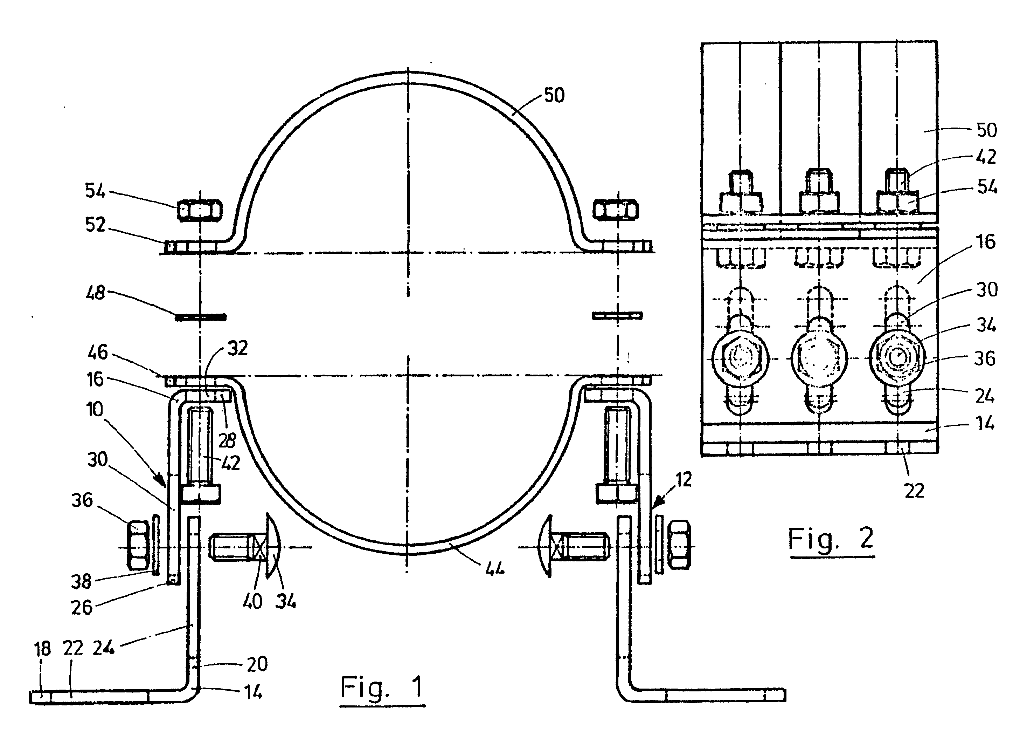

Die in Fig. 1 und 2 gezeigte Haltevorrichtung besteht aus zwei identischen Paaren von Winkelstücken 10 und 12. Zu jedem Paar Winkelstücke gehört ein Unterteil 14 und ein Oberteil 16. Im Beispielsfall sind die beiden Schenkel 18 und 20 des Unterteils gleichlang und jeweils in gleicher Weise mit drei Langlöchern versehen, die sich quer zur Scheitelkante des Unterteils erstrecken. Die Langlöcher in dem als Fuß dienenden Schenkel 18 sind mit 22 und die Langlöcher in dem aufragenden Schenkel 20 mit 24 bezeichnet. Die aus Fig. 2 ersichtliche Breite des Unterteils 14 wie auch des Oberteils 16 beträgt im Ausführungsbeispiel 6 cm. Sie gewährleistet eine sichere Abstützung auf einer nichtgezeigten Unterlage, mit welcher die Haltevorrichtung mittels Schrauben verbunden wird, die sich durch die Langlöcher 22 erstrecken. Im übrigen richtet sich die Breite der Winkelstücke 14 und 16 nach den aufzunehmenden Kräften und der Anzahl der an der Haltevorrichtung zu befestigenden Rohrschellen. Gemäß Fig. 2 sind drei Rohrschellen an der Haltevorrichtung befestigt, und jedes Unterteil 14 wird über die Langlöcher 22 mit drei Schrauben an der Unterlage fixiert. Bei anderen Einsatzbedingungen könnten auch weniger oder mehr als drei Rohrschellen an der Haltevorrichtung angebracht und diese könnte mit nur zwei oder z.B. vier oder mehr Schrauben an der Unterlage befestigt werden.

Das Oberteil 16 hat einen langen Schenkel 26 und einen kurzen Schenkel 28. Der am Unterteil 14 anliegende lange Schenkel 26 ist mit drei Langlöchern 30 versehen, die über die Breite ebenso verteilt sind wie die Langlöcher 24 im Unterteil 14. Im kurzen Schenkel 28 des Oberteils 16 sind drei runde Durchstecklöcher 32 für Schrauben angebracht. Wie sich aus Fig. 2 ergibt, liegen die Mittellinien der Durchstecklöcher 32 und sämtlicher Langlöcher 22, 24, 30 in drei senkrechten Ebenen.

Unterteil 14 und Oberteil 16 werden durch drei Verbindungsschrauben 34 mit Muttern 36 und Unterlegscheiben 38 zusammengehalten. Die Verbindungsschrauben 34 weisen unter dem Kopf einen im Querschnitt quadratischen Kopfsockel 40 auf, dessen Kantenlänge nur geringfügig kürzer als die Breite der Langlöcher 24 und 30 bemessen ist, so daß die Verbindungsschrauben 34 gegen Drehung gehalten sind, wenn sie sich bei der Montage mit dem Sockel 40 in Eingriff mit wenigstens einem der Langlöcher 24, 30 befinden. Dabei wird die Anordnung vorzugsweise derart getroffen, daß die Verbindungsschrauben 34 mit ihren Köpfen gegeneinanderweisen, so daß sich die Sechskantmuttern 36 gut zugänglich auf den Außenseiten der Haltevorrichtung befinden.

In den Durchstecklöchern 32 sitzen im montierten Zustand Befestigungsschrauben 42, wobei deren Gewindeschaft nach oben weist. Der Abstand der Durchstecklöcher 32 vom langen Schenkel 26 des Oberteils 16 ist mit Bezug auf die Schlüsselweite des Vierkant- oder Sechskantschraubenkopfs der Verbindungsschrauben 42 so bemessen, daß eine Schlüsselfläche des Schraubenkopfs am Schenkel 26 des Oberteils 16 anliegt oder mit so dichtem Abstand daneben liegt, daß eine Drehung der sich durch ein Durchsteckloch 32 erstreckenden Befestigungsschraube 42 verhindert ist.

Bei der Montage einer oder mehrerer Rohrschellen auf der beschriebenen Haltevorrichtung wird zunächst die mit 44 bezeichnete untere Bügelhälfte mit ihren gelochten seitlichen Flanschen 46 auf die nach oben aus den Durchstecklöchern 32 herausragenden Befestigungsschrauben 42 aufgesteckt. Durch z.B. aus einem elastischen oder weichen Material bestehende Ringe 48, die stramm auf dem Gewindeschaft der Befestigungsschrauben 42 sitzen, können diese am Zurückrutschen und Herausfallen nach unten gehindert werden.

3

Anschließend wird die mit 50 bezeichnete obere Bügelhälfte mit ihren gelochten seitlichen Flanschen 52 auf ein gegenüberliegendes Paar Befestigungsschrauben 42 aufgesteckt, und dann werden von oben Muttern 54 auf- und festgeschraubt, wobei ein zwischen den Bügelhälften 44 und 50 der Rohrschelle gehaltenes Rohr fest eingespannt wird. Es versteht sich, daß dabei zwischen der Rohrschelle und dem Rohr eine Schalldämmeinlage vorhanden sein kann.

Die neue Haltevorrichtung bewährleistet nicht nur eine sehr stabile, sondern auch eine sehr anpassungsfähige Halterung der Rohrschellen. Bei gleichem Abstand der Winkelstückpaare 10 und 12 können im Rahmen der Langlöcher 22 die Befestigungsschrauben für die Befestigung an der Unterlage mehr oder weniger weit auseinander liegen. Je nach gewünschtem Abstand des Rohrs von der Unterlage — dies kann eine Boden-, Wand- oder Deckenfläche sein — können Unterteil 14 und Oberteil 16 im Rahmen der Langlöcher 24 und 30 mehr oder weniger weit zusammengeschoben sein und einander überdecken. Diese Anpassungsfähigkeit wird auch bei Verwendung für Rohrschellen unterschiedlicher Größen gebraucht. Bei Rohrschellen mit größerem Durchmesser können Unterteil 14 und Oberteil 16 weiter auseinandergezogen und dadurch die Haltevorrichtung erhöht werden. Gleichzeitig kann selbst unter Beibehaltung der Befestigungspunkte an der Unterlage der Zwischenabstand der beiden Unterteile 14 entsprechend dem Rohrschellendurchmesser vergrößert werden.

Selbst bei starken in Längsrichtung des Rohrs wirkenden Kräften und fester Einspannung des Rohrs mittels mehrerer Rohrschellen treten keine Biegemomente auf, die Verformungen zur Folge haben könnten. Die Winkelstücke können in Längsrichtung des Rohrs praktisch nicht verbogen werden und würden beim Auftreten starker Kräfte nur dazu neigen, sich mit einer Endkante stärker auf der Unterlage abzustützen und mit der anderen Endkante abzuheben. Dies wird aber durch die sich durch die Langlöcher 22 erstreckenden Befestigungsschrauben verhindert, welche ebenfalls nicht auf Biegung, sondern im wesentlichen nur auf Zug beansprucht werden.

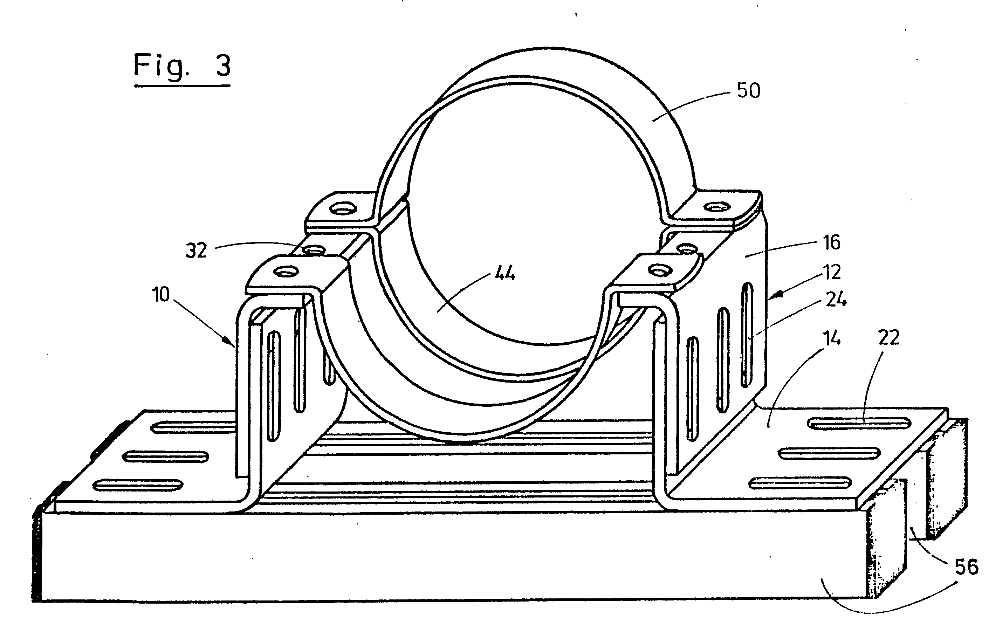

Wie das Ausführungsbeispiel nach Fig. 3 zeigt, müssen die Unterteile 14 nicht unbedingt an einer Boden-, Wand- oder Deckenfläche festgelegt werden. Die Unterlage kann auch aus einem Podest, gebildet z.B. durch zwei Schienenstücke 56, bestehen, welches seinerseits in wenigstens einer Richtung frei verschieblich an einer Grundfläche, z.B. der Bodenfläche, anliegt. In diesem Fall ergibt sich eine Haltevorrichtung großer Tragkraft, die Ausgleichsbewegungen des Rohrs gestattet.

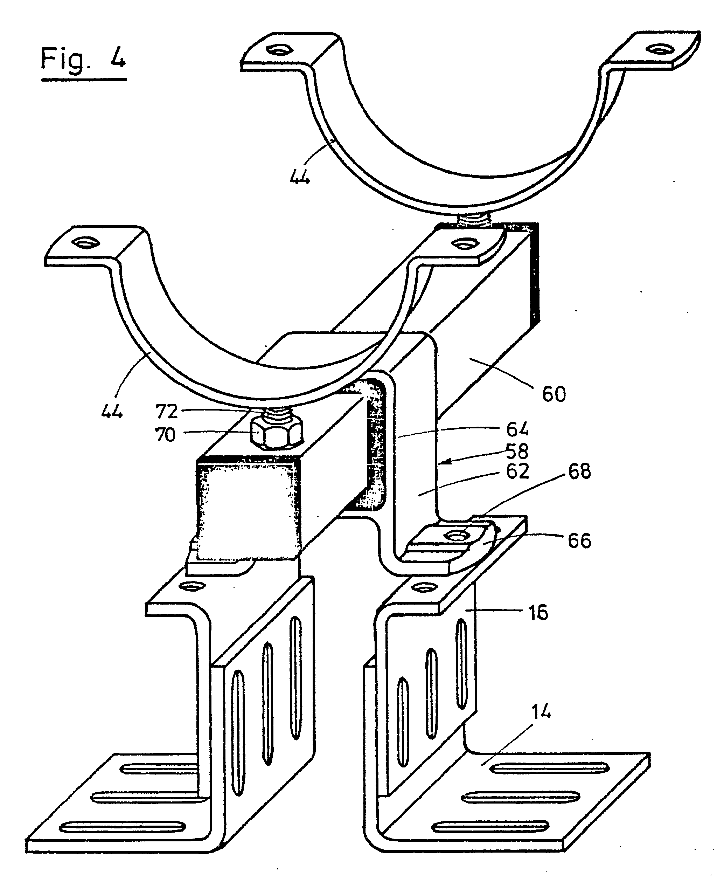

Ähnliches leistet die in Fig. 4 gezeigte Ausführung. Hier sind die Unterteile 14 der Haltevorrichtung beispielsweise mittels Dübeln am Boden, an einer Wand oder der Decke unverrückbar festgelegt. Die Oberteile 16 tragen aber nicht unmittelbar, wie gemäß Fig. 1 bis 3, die Rohrschellen, sondern zunächst eine Gleitführung 58 für ein Schiebestück 60, an dem dann erst die Rohrschellen befestigt sind. Die Gleitführung 58 besteht im Ausführungsbeispiel nach Fig. 4 aus einem äußeren tragenden Ring 62, z.B. aus einem metallischem Werkstoff, in dessen quadratische Öffnung eine Gleitbuchse 64 fest eingesetzt ist. Seitliche Flanschen 66 am Ring 62 sind mit Durchstecklöchern 68 versehen, durch welche die Befestigungsschrauben 42 hindurchgesteckt werden können, um die Gleitführung 58 auf dem kurzen Schenkel 28 des Oberteils 16 zu befestigen.

Zur Befestigung der Rohrschellen 44, 50 an dem länglichen, zum innern Querschnitt der Gleichbuchse 64 passenden Schiebestück 60 sind im Beispielsfall auf dessen Oberseite Muttern 70 angeschweißt. Dazu passend sind in der Mitte der unteren Bügelhälften 44 der Rohrschellen Gewindezapfen 72 angeschweißt. Diese können in die Muttern 70 eingeschraubt werden.

Die Haltevorrichtung nach Fig. 4 setzt Kräften in Längsrichtung des Rohrs keinen Widerstand entgegen, so daß sich das Rohr z.B. bei Temperaturänderungen ohne Verspannungen frei ausdehnen und wieder zusammenziehen kann. Gleichzeitig kann die Haltevorrichtung große Tragkräfte aufnehmen und das Rohr auch gegen seitlich wirkende Querkräfte halten.

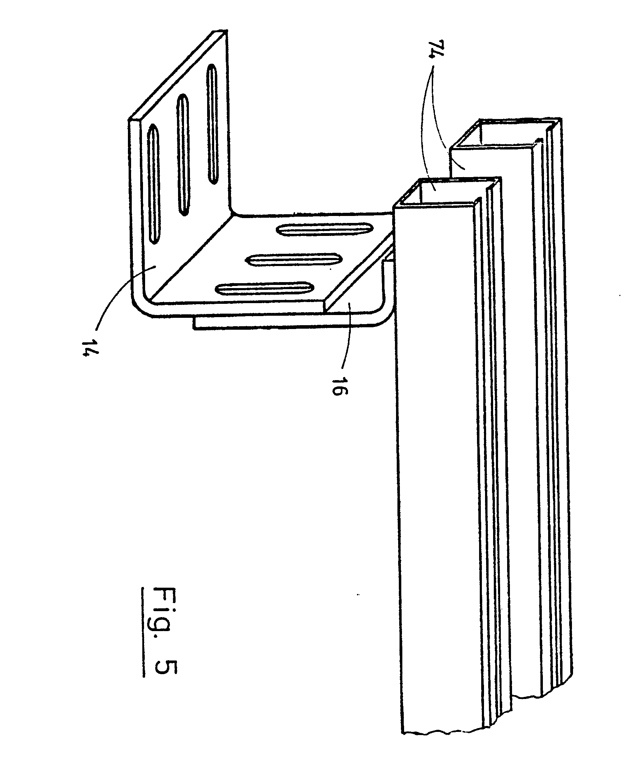

Fig. 5 zeigt, daß die neue Haltevorrichtung auch dazu benutzt werden kann, eine oder mehrere Tragschienen 74, z.B. sog. C-Schienen am Boden, einer Wand oder unter einer Decke zu befestigen, an denen dann in bekannter Weise Rohrschellen angebracht werden können.

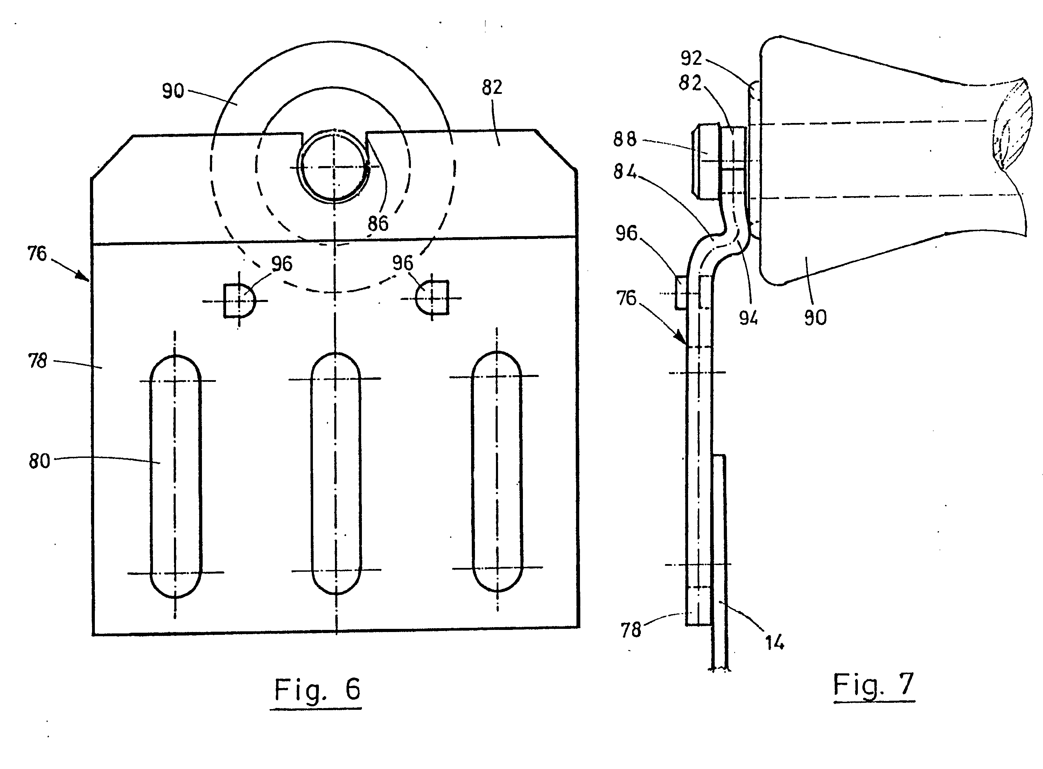

Fig. 6 und 7 zeigen eine Haltevorrichtung nicht für Rohrschellen, sondern für ein Rohrlager mit einer drehbaren Rolle. In diesem Fall finden auch zwei Unterteile 14 gemäß Fig. 1 bis 5 Anwendung. Sie sind aber mittels der Verbindungsschrauben 34 und Muttern 36 nicht mit den bisher beschriebenen Oberteilen 16 verbunden, sondern jeweils mit einem abgewandelten Oberteil 76, welches nur mit seinem unteren, langen Schenkel 78 mit Langlöchern 80 dem Schenkel 26 mit Langlöchern 30 des Oberteils 16 entspricht. Das freie Ende 82 des mit 84 bezeichneten kürzeren Schenkels erstreckt sich gemäß Fig. 7 parallel zum längeren Schenkel 78 und ist in der Mitte mit einer nach oben offenen, am Grund halbkreisförmigen Aussparung 86 ausgebildet. In den gegenüberliegenden Aussparungen 86 der beiden gabelförmigen Oberteile 76 sitzt eine an den Lagerstellen mit Ringnuten versehene Achse 88, auf welcher eine Rolle 90 drehbar gelagert ist. Die Mantelfläche der Rolle 90 kann entsprechend dem Durchmesser des zu lagernden Rohrs konkav gekrümmt sein, so daß zwischen dem Rohr und der Rolle 90 eine Linienberührung zustande kommt.

Eine weitere Besonderheit der Konstruktion nach Fig. 6 und 7 besteht darin, daß die Rolle 90 auf beiden

4

Seiten mit einem axial vorstehenden Ringwulst 92 an einer Vorwölbung 94 des Schenkels 84 zur Berührung kommt. Auf diese Weise ergibt sich nur eine begrenzte, definierte Berührungszone zwischen der Rolle 90 und dem gabelförmigen Oberteil 76.

Über das auf der Rolle 90 liegende Rohr kann ein Metallband geführt werden, dessen Enden durch die Verbindungsschrauben 34 gehalten sind, die sich durch die mittleren Langlöcher 80 erstrecken. Zur seitlichen Führung des nichtgezeigten Metallbands sind im Ausführungsbeispiel nach Fig. 6 und 7 zwei kleine Laschen 96 oberhalb des mittleren Langlochs 80 aus dem Schenkel 78 nach außen herausgebogen. Der Zwischenabstand zwischen den Laschen 96 ist passend zur Breite des Metallbands gewählt.

Sämtliche Winkelstücke 14, 16, 76 können als Gußstücke aus Metall oder Kunststoff hergestellt sein. Für die einfachen Winkelstücke 14 und 16 kommt auch die Herstellung durch Abschneiden von Profilmaterial in Frage. Schließlich können die genannten Teile auch durch Formung von Stahlblechstreifen hergestellt werden.

Über die gezeigten Ausführungsbeispiele hinaus kann eine weitere zweckmäßige Ausführungsform der Erfindung dadurch gewonnen werden, daß die Aussparung 86 gemäß Fig. 6 und 7 in einem Oberteil 16 gemäß Fig. 1 angebracht wird. Dabei kann sich die Aussparung 86 z.B. zwischen zwei Durchstecklöchern 32 befinden. Ein derartiges Oberteil 16 gestattet dann wahlweise entweder die Befestigung einer Rohrschelle gemäß Fig. 1 oder die Lagerung einer Rolle gemäß Fig. 6 und 7. Man kommt also mit einem einzigen Oberteil 16 für beide Alternativen der Rohrbefestigung bzw. Rohrlagerung aus.

## Patentansprüche

1. Haltevorrichtung für eine oder mehrere Rohrschellen oder andere Rohrlager, die aus zwei mit Zwischenabstand auf einer Unterlage (56) befestigbare Paaren (10, 12) von durch Verbindungschrauben (34) verbundenen Winkelstücken (14, 16, 76) besteht, gebildet jeweils von einem Unterteil (14) mit Langlöchern (22, 24) in beiden Schenkeln (18, 20) und einem Oberteil (16, 76) mit in seinem einen Schenkel (26, 78) angeordneten, im montierten Zustand mit Langlöchern (24) im Unterteil (14) fluchtenden Langlöchern (30, 80), durch welche sich die Verbindungsschrauben (34) erstrecken, sowie mit Befestigungsmitteln (32, 42, 54 ; 86) zur direkten oder indirekten Anbringung der Rohrschellen oder Rohrlager am anderen Schenkel (28, 84), **dadurch gekennzeichnet,** daß sich in beiden Schenkeln (18, 20) des Unterteils (14) und in dem einen Schenkel (26, 78) des Oberteils (16, 76) jeweils mehrere Langlöcher (30, 80) quer zur Scheitelkante der Winkelstücke (14, 16, 76) erstrecken.

2. Haltevorrichtung nach Anspruch 1, **dadurch gekennzeichnet,** daß die Befestigungsmittel runde Durchstecklöcher (32) für Befestigungsschrauben (42) sind.

3. Haltevorrichtung nach Anspruch 2, **dadurch gekennzeichnet,** daß die Durchstecklöcher (32) mit solchem Abstand von dem mit Langlöchern (30) versehenen Schenkel (26) des Oberteils (16) angeordnet sind, daß dadurch die mit einem Schraubenkopf mit polygonalem Querschnitt versehenen Befestigungsschrauben (42) undrehbar gehalten sind.

4. Haltevorrichtung nach einem der Ansprüche 1 bis 3, **dadurch gekennzeichnet,** daß die Verbindungsschrauben (34) mit einem Schraubenkopfsockel (40) mit polygonalem Querschnitt ausgebildet sind, welcher im montierten Zustand undrehbar in einem Langloch (24, 30, 80) sitzt.

5. Haltevorrichtung nach einem der Ansprüche 2 bis 4, **dadurch gekennzeichnet,** daß die mit Durchstecklöchern (32) versehenen Schenkel (28) der Oberteile (16) im montierten Zustand an den Flanschen (46) einer Rohrschellenhälfte (44) anliegen und mit ihren freien Enden bis nahe an den halbringförmigen Teil der Rohrschellenhälfte (44) heranreichen.

6. Haltevorrichtung nach einem der Ansprüche 1 bis 5, **dadurch gekennzeichnet,** daß die Oberteile (16) durch die Befestigungsschrauben (42, 54) mit Schienen (74) verbunden sind, welche die Rohrschellen (44, 50) oder Rohrlager (90) tragen.

7. Haltevorrichtung nach einem der Ansprüche 1 bis 5, **dadurch gekennzeichnet,** daß die Oberteile (16) durch die Befestigungsschrauben (42, 54) mit einer Gleitführung (58) für ein Schiebestück (60) verbunden sind, an welchem wenigstens eine Rohrschelle (44, 50) befestigt ist.

8. Haltevorrichtung nach einem der Ansprüche 1 bis 7, **dadurch gekennzeichnet,** daß die Befestigungsmittel durch Aufnahmen (86) für wenigstens eine Achse (88) einer Tragrolle (90) für Rohre gebildet sind.

9. Haltevorrichtung nach Anspruch 8, **dadurch gekennzeichnet,** daß jede Aufnahme durch eine nach oben offene, am Grund halbkreisförmige Aussparung (86) im Oberteil (16, 76) gebildet ist.

10. Haltevorrichtung nach Anspruch 8 oder 9, **dadurch gekennzeichnet,** daß sich die Aussparung (86) durch den Schenkel (28) mit den Durchstecklöchern (32) hindurch in den Schenkel (26) mit den Verbindungslöchern (30) erstreckt.

11. Haltevorrichtung nach Anspruch 8 oder 9, **dadurch gekennzeichnet,** daß sich das freie Ende (82) des mit der Aussparung (86) versehenen Schenkels (84) des Oberteils (76) parallel zu dem mit den Verbindungslöchern (80) versehenen Schenkel (78) erstreckt.

12. Haltevorrichtung nach einem der vorhergehenden Ansprüche, **dadurch gekennzeichnet,** daß die Unterlage (56) in wenigstens einer Richtung frei verschieblich an einer Grundfläche anliegt.

13. Haltevorrichtung nach einem der Ansprüche 8 bis 11, **dadurch gekennzeichnet,** daß Laschen (96) aus dem mit Verbindungslöchern (80) versehenen Schenkel (78) des Oberteils (76) nach außen herausgebogen sind, welche als Führung für ein an Verbindungsschrauben (34) befestigtes, über ein Rohr geführtes Band dienen.

## Claims

1. A retaining device for one or more pipe clamps or other pipe mounting, which comprises two pairs (10, 12) of angle members (14, 16, 76) which can be secured to a base (56) and which are connected by connecting screws (34), each formed by a bottom part (14) with slots (22, 24) in both arms (18, 20) and by a top part (16, 76) with slots (30, 80) which are provided in one of its arms (26, 78), which in the assembled condition are aligned with slots (24) in the bottom part (14) and through which the connecting screws (34) extend, and also with fastening means (32, 42, 54 ; 86) for the direct or indirect mounting of the pipe clamps or pipe mountings to the other arm (28, 84), characterised in that in both arms (18, 20) of the bottom part (14) and in one arm (26, 78) of the top part (16, 76) a plurality of respective slots (30, 80) extend transversely to the apex edge of the angle members (14, 16, 76).

2. A retaining device according to Claim 1, characterised in that the fastening means are circular through-holes (32) for fastening screws (42).

3. A retaining device according to Claim 2, characterised in that the through-holes (32) are disposed at such a distance apart from the arm (26) of the top part (16) provided with slots (30) that the fastening screws (42) provided with a screw head of polygonal cross-section are retained non-rotatably.

4. A retaining device according to any one of Claims 1 to 3, characterised in that the connecting screws (34) are formed with a screw head base (40) of polygonal cross-section, which is seated non-rotatably in a slot (24, 30, 80) in the assembled condition.

5. A retaining device according to any one of Claims 2 to 4, characterised in that, in the assembled condition, the arms (28) of the top parts (16) provided with through-holes (32) bear against the flanges (46) of one pipe clamp half (44) and extend with their free ends close up to the semi-annular part of the pipe clamp half (44).

6. A retaining device according to any one of Claims 1 to 5, characterised in that the top parts (16) are connected by the fastening screws (42, 54) to rails (74) which carry the pipe clamps (44, 50) or pipe mountings (90).

7. A retaining device according to any one of Claims 1 to 5, characterised in that the top parts (16) are connected by the fastening screws (42, 54) to a sliding guide (58) for a slide member (60), to which at least one pipe clamp (44, 50) is fastened.

8. A retaining device according to any one of Claims 1 to 7, characterised in that the fastening means are formed by accommodating means (86) for at least one spindle (88) of a support roller (90) for pipes.

9. A retaining device according to Claim 8, characterised in that each accommodating means is formed in the top part (16, 76) by an upwardly open recess (86) which is of semi-circular shape at the base.

10. A retaining device according to Claim 8 or 9, characterised in that the recess (86) extends through arm (28) with the through-holes (32) into the arm (26) with the connecting holes (30).

11. A retaining device according to Claim 8 or 9, characterised in that the free end (82) of the arm (84) of the top part (76) provided with the recess (86) extends parallel to the arm (78) provided with the connecting holes (80).

12. A retaining device according to any one of the preceding Claims, characterised in that in at least one direction the base (56) abuts freely displaceably along a base surface.

13. A retaining device according to any one of Claims 8 to 11, characterised in that clips (96) are bent outwards from the arm (78) of the top part (76) provided with connecting holes (80) and they serve as a guide for a strap secured to connecting screws (34) and guided via a pipe.

## Revendications

1. Dispositif de fixation pour une ou plusieurs brides d'attache ou autres supports de tuyaux qui comprend deux paires (10, 12) avec intervalle intermédiaire, fixables sur un support (56) d'équerres (14, 16, 76) reliées par des vis de fixation (34), formées chacune d'une pièce inférieure (14) avec des trous oblongs (22, 24) dans les deux pattes (18, 20) et d'une pièce supérieure (16, 76) avec des trous oblongs (30, 80) disposés dans une de ses pattes (26, 78) s'alignant à l'état monté avec les trous oblongs (24) de la pièce inférieure (14), à travers lesquels passent les vis de fixation (34) ainsi qu'avec des moyens de fixation (32, 42, 54 ; 86) pour montage direct ou indirect des brides d'attache ou support de tuyau sur l'autre patte (28, 84), caractérisé en ce que dans les deux pattes (18, 20) de la pièce inférieure (14) et dans l'une des pattes (26, 78) de la pièce supérieure (16, 76) s'étendent plusieurs trous oblongs (30, 80) perpendiculairement à l'arête des équerres (14, 16, 76).

2. Dispositif de fixation selon la revendication 1, caractérisé en ce que les moyens de fixation sont des trous ronds traversants (32) pour des vis de fixation (42).

3. Dispositif de fixation selon la revendication 2, caractérisé en ce qu'on place les trous traversants (32) à une distance telle de la patte (26) munie de trous oblongs (30) de la pièce supérieure (16), et en ce que des vis de fixation (42) à tête de section polygonale, sont maintenues de façon à ne pas pouvoir tourner.

4. Dispositif de fixation selon l'une des revendications 1 à 3, caractérisé en ce que les vis de fixation (34) sont constituées d'un socle de tête de vis à section polygonale, qui repose à l'état monté dans un trou oblong (24, 30, 80) de façon à ne pas pouvoir tourner.

5. Dispositif de fixation selon l'une des revendications 2 à 4, caractérisé en ce que les parties supérieures (16) des pattes (28) munies de trous traversants (32) reposent à l'état monté sur les brides (46) d'un demi-collier (44) et parviennent avec leurs extrémités libres jusqu'à proximité de la partie semi-annulaire du demi-collier (44).

6. Dispositif de fixation selon l'une des revendications 1 à 5, caractérisé en ce qu'on relie les pièces supérieures (16) par des vis de fixation (42, 54) aux rails (74) qui portent les colliers (44, 50) ou les supports de tuyau (90).

7. Dispositif de fixation selon l'une des revendications 1 à 5, caractérisé en ce qu'on relie les pièces supérieures (16) par les vis de fixation (42, 54) à un guidage glissant (58) pour une pièce coulissante, sur laquelle on a fixé au moins un collier (44, 50).

8. Dispositif de fixation selon l'une des revendications 1 à 7, caractérisé en ce qu'on constitue les moyens de fixation pour le logement (86) d'au moins un axe (88) d'un galet porteur (90) des tuyaux.

9. Dispositif de fixation selon la revendication 8, caractérisé en ce qu'on réalise chaque logement par un évidement (86) dont le fond est en demi-cercle, ouvert vers l'extérieur dans la pièce supérieure (16, 76).

10. Dispositif de fixation selon les revendications 8 ou 9, caractérisé en ce que l'évidement (86) s'étend à travers la patte (28) avec les trous traversants (32) dans la patte (26) avec les trous de fixation (30).

11. Dispositif de fixation selon les revendications 8 ou 9, caractérisé en ce que l'extrémité libre (82) de la patte (84) de la pièce supérieure (76) munie de l'évidement (86) s'étend parallèlement à la patte (78) munie de trous de fixation (80).

12. Dispositif de fixation selon l'une des revendications précédentes, caractérisé en ce que l'embase (56) repose de manière à pouvoir coulisser librement, au moins dans une direction, sur une surface de base.

13. Dispositif de fixation selon l'une des revendications 8 à 11, caractérisé en ce que les attaches (96) sont courbées vers l'extérieur en dehors de la patte (78) munie de trous de fixation (80) de la pièce supérieure (76), qui servent de guidage à un ruban guidé sur un tuyau et fixé par des vis de fixation (34).

Fig. 1

Fig. 2

Fig. 3

Fig. 4

Fig. 5

EP 0 328 909 B1

Fig. 7

Fig. 6